Europäisches Patentamt

European Patent Office

Office européen des brevets

(11) Publication number: **0 270 266**
**A1**

## EUROPEAN PATENT APPLICATION

(21) Application number: 87309983.2

(22) Date of filing: 11.11.87

(51) Int. Cl.⁴: **H02K 57/00**

(30) Priority: 11.11.86 ZA 868543

(43) Date of publication of application:
08.06.88 Bulletin 88/23

(84) Designated Contracting States:
AT BE CH DE ES FR GB GR IT LI LU NL SE

(71) Applicant: **Tivon, Gil Gershon**
**4 Sable Lodge 71 Elray Street**
**Fairmont 2192 Transvaal(ZA)**

(72) Inventor: **Tivon, Gil Gershon**
**4 Sable Lodge 71 Elray Street**
**Fairmont 2192 Transvaal(ZA)**

(74) Representative: **Cross, Rupert Edward Blount**
**et al**
**BOULT, WADE & TENNANT 27 Furnival Street**
**London EC4A 1PQ(GB)**

(54) **Magnetic machine.**

(57) THE INVENTION provides a cycle for a magnetic machine comprising a first stage utilizing the potential energy of opposed spaced magnets (13, 14) of dissimilar polarity to cause movement of a first (10) and a second member (11) towards one another, such movement being oblique whereby the magnets in moving towards one another move progressively out of alignment; a second stage wherein external energy is applied to move the aforesaid magnets of dissimilar polarity further out of alignment; and a third stage wherein the potential energy of magnets of like polarity in close proximity to one another are utilized to move the aforesaid first and second members away from one another; and a return stage wherein the members are returned to the starting phase of the first stage for a repeat of the cycle.

FIG 1

## MAGNETIC MACHINE

THIS invention relates to a magnetic machine and to the working cycle of such machine.

It is an object of the present invention to provide a novel magnetic machine which it is believed will exhibit a high working efficiency.

According to the invention a cycle for a magnetic machine comprises a first stage utilizing the potential energy of opposed spaced magnets of dissimilar polarity to cause movement of a first and a second member towards one another, such movement being oblique whereby the magnets in moving towards one another move progressively out of alignment; a second stage wherein external energy is applied to move the aforesaid magnets of dissimilar polarity further out of alignment; and a third stage wherein the potential energy of magnets of like polarity in close proximity to one another are utilized to move the aforesaid first and second members away from one another; and a return stage wherein the members are returned to the starting phase of the first stage for a repeat of the cycle.

It is envisaged that during the third stage the member will move away from one another perpendicularly or alternatively, in an oblique direction opposed to the oblique movement during the first stage.

Further according to the invention the cycle envisages that the magnets of like polarity will be brought into close proximity with one another during the first stage and the second stage wherein the magnets of dissimilar polarity move towards and out of alignment with one another.

In one arrangement of the invention the movable members will be returned to the starting point of the first stage by causing one of the members to repeat the aforesaid magnetic cycle in a reverse direction in conjunction with a third member.

Also included within the scope of the invention is a magnetic machine utilizing the aforesaid cycle comprising a first member and a second member, guide means for constraining the members to move obliquely towards one another and away from one another during cyclical movement of such members, opposed magnets mounted on the members, such magnets being of dissimilar polarity and in general alignment with one another at the start of the oblique movement of the members towards one another and further magnets mounted on the members, such magnets being of like polarity and being generally out of alignment during the start of the oblique movement of the members towards one another, and generally in alignment at the end of such oblique movement.

Further according to this aspect of the invention the aforesaid magnets are such that magnetic forces attracting the members towards one another is substantially the same as magnetic forces tending to repel the members away from one another.

Also according to the invention the magnetic flux at the sides of all or selected magnets is reduced by fragmentizing the magnets into a plurality of spaced magnets, or by providing a shield of magnetisable material in association with all or selected magnets or by any other means.

Preferably, a shield of magnetisable material will be provided over the opposed surfaces of the magnets; and extend beyond the magnets of like polarity generally to allign with an opposed magnet.

In order more clearly to illustrate the invention an embodiment thereof is described hereunder purely by way of example and without thereby restricting the scope of the invention. The embodiment is described with reference to the accompanying drawings wherein:

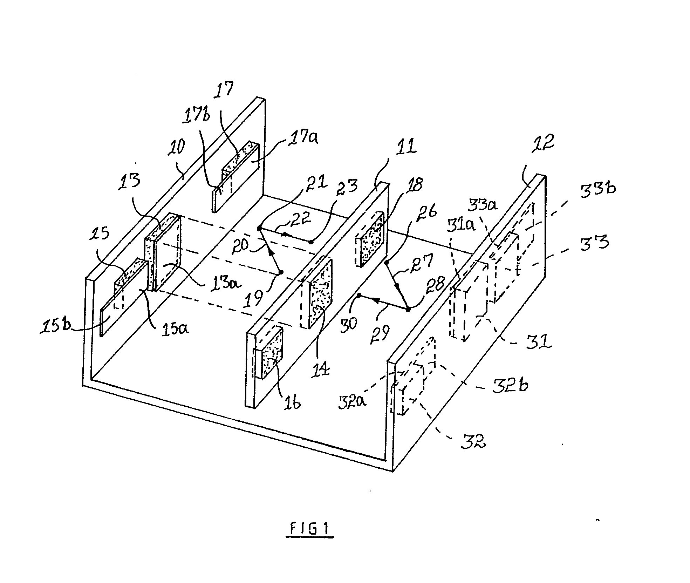

Figure 1 is a perspective view in schematic form of a magnetic machine, and

Figure 2 is a perspective view in schematic form of part of the machine in Figure 1.

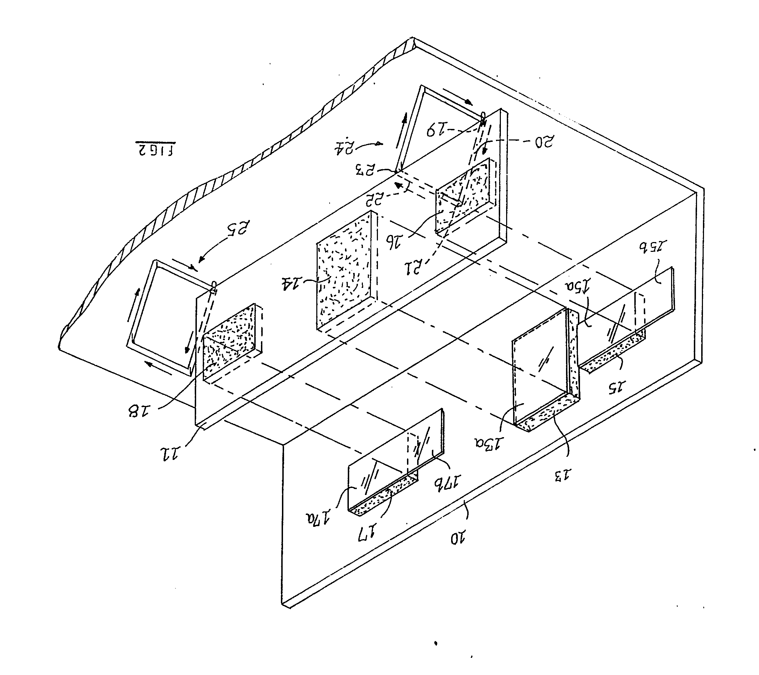

The drawings mentioned above illustrate the principle of a magnetic machine in accordance with the invention and are not intended to represent a working model. Referring to the drawings the magnetic machine comprises a first member 10 and a second member 11, the latter being movable relative to the member 10 along a predetermined pathway as described below. It is envisaged that suitable guide means will be provided to constrain the member 11 to follow such predetermined pathway under the influence of magnetic and other forces. Such guide means are shown merely in schematic form at 24 and 25, Figure 2 and it will be appreciated that many variations are possible with regard to the guide means.

In the embodiment illustrated the members 10 and 11 carry permanent magnets 13 and 14 respectively which are of opposed polarity and thus attract one another. On either side of the magnet 13, magnets 15 and 17 are provided which are opposed during a portion of a working cycle as described below by magnets 16 and 18 respectively carried by the member 11. The magnets 15 and 16 as well as the magnets 17 and 18 are of opposed polarity and thus repel one another when in alignment. Preferably the magnets 15, 16, 17 and 18 will have about half the magnetic strength of the magnets 13 and 14 but many variations will be possible in this regard depending on the desired pathway of the member 11.

The invention envisages that the movable member 11 will move from a starting point 19 toward the member 10 under the influence of the attractive force of the magnets 13 and 14 which will be in alignment with one another at this point as shown in Figure 2. Then at this point on the otherhand the magnets 15 and 16 as well as 17 and 18 will be out of alignment as illustrated. By virture of the guides 24, 25, and the attractive force of the magnets 13 and 14, the member 11 will be constrained to move obliquely towards the member 10 along the path 20. As the member 11 moves along the paths 20, the magnets 13 and 14 will progressively move out of alignment reducing their attractive force, and at the same time the magnets 15 and 16 as well as the magnets 17 and 18 will progressively move into alignment and begin to repel one another. Thus towards the end zone of the pathway 20, equilibrium will be reached between the attractive and repelling forces of the respective magnets and the invention envisages that external force will be applied to the member 11 to move it towards an end point 21 of the pathway 20 at which stage the attracting magnets 13 and 14 will be substantially fully out of alignment while the magnets 15 and 16 and the magnets 17 and 18 will be in alignment. From the point 21 the guides 24, 25 will permit movement of the member 11 away from the member 10 under the influence of the repelling forces of the magnets 15, 16, and 17, 18 in a longitudinal path 22 substantially normal to the plane of the member 10 towards an end point 23.

At this stage the member 11 will thus have moved through a cycle comprising three stages, namely a first stage wherein the member 11 moved obliquely towards the member 10 under the influence of the attracting magnets 13 and 14, a second stage wherein external force was applied to move the member 11 to the end point of the oblique path 20, and a third stage wherein the member 11 moved perpendicularly away from the member 10 along the path 22 under the influence of the repelling forces of the magnets 15, 16, and 17, 18.

In an alternative arrangement, not shown, the member 11 will move away from the member 10 during the third stage in an oblique direction, opposed to the oblique direction of the first stage. With such an arrangement, the magnets 13 and 14 could for example be substantially halfway out of alignment at the end of the first stage and the magnets 15 and 16 and 17 and 18 could likewise be substantially halfway in alignment. It will further be appreciated that the pathways of the first, second and third stage need not be linear, but could for example be curved, etc.

The cycle of the machine comprises a fourth stage wherein the member 11 is returned to the starting point 19 of the first phase. In one arrangement of the invention it is envisaged that the fourth stage will comprise a reverse of the first three stages with a third member 12 being provided on the side of the member 11 opposite the side facing the member 10 and having magnets 31, 32 and 33 which are the reverse of the magnets 13, 17 and 15 respectively. Thus during the reverse cycle the member 11 will move obliquely from a starting point 26 along a path 27 towards the member 12. From an end point 28 of the path 27, the member 11 will move perpendicularly away from the member 12 towards an end point 30 which coincides with the starting point 19 of the first portion of the cycle.

It will be appreciated that the magnetic cycle described above can be applied to many configurations of magnetic machines. For example in different configuration the member 11 could be stationary with the members 10 and 12 being movable towards and away therefrom in accordance with the cycle of the invention.

It is a feature of the invention that the side forces operating on the respective magnets will be reduced to enable magnets to move out of alignment and into alignment as described above during oblique movement of the member 11 along the path 20, 27. The invention envisages that side forces will be reduced by dividing the magnets 13, 15 and 17 or 31, 32 and 33 as the case may be into a multitude of small adjacently disposed magnets. This can be achieved by providing a plurality of strip magnets separated from one another by ferro-magnetic poles, or alternatively as illustrated by cladding the operative faces of the magnets with sheets of ferro-magnetic material. Such sheets of ferro-magnetic material are shown at 13a, 15a, 17a, 31a, 32a and 33a in respect of the magnets 13, 15, 17, 31, 32, and 33 respectively. It has been found that the sheets of ferro-magnetic material which will for example be of soft iron will substantially reduce side forces while attractive or repelling forces as the case may be will remain substantially unaltered. It will be noted that in the case of the repelling magnets 15, 17, 32, and 33 the ferro-magnetic sheets extend beyond their respective magnets with such extended portions shown at 15b, 17b, 32b and 33b aligning with the opposed repelling magnets 16 and 17 at the starting points 19 and 26 respectively. It has been so designed that the polarity of the extended portions of the sheets, i.e. portions 15b, 17b, 32b and 33b are of an opposed polarity relative to the magnets 16 and 18 and thus attract these and increase attractive forces on the member 11 during the oblique movement.

It is believed that a magnetic machine utilising the magnetic cycle of the invention will operate effectively. It is not intended however to claim or suggest that such machine will operate or perform contrary to the laws of nature.

Doubtless many variations of the invention exist without departing from the principles set out in the consistory clauses. For example it will be appreciated that the speed of the cycle of the invention is capable of being varied by varying a number of criteria such as the lengths of the paths, the strength of the magnets, quantum of the external force, etc. The invention is directed towards a novel magnetic cycle, a magnetic machine employing such cycle, as well as a method and means of reducing side forces between opposed attracting or repelling magnets. .

## Claims

1. A cycle for a magnetic machine comprising a first stage utilizing the potential energy of opposed spaced magnets of dissimilar polarity to cause movement of a first and a second member towards one another, such movement being oblique whereby the magnets in moving towards one another move progressively out of alignment; a second stage wherein external energy is applied to move the aforesaid magnets of dissimilar polarity further out of alignment; and a third stage wherein the potential energy of magnets of like polarity in close proximity to one another are utilized to move the aforesaid first and second members away from one another; and a return stage wherein the members are returned to the starting phase of the first stage for a repeat of the cycle.

2. The cycle according to claim 1 wherein the first and second members move away from one another in a generally perpendicular direction during the third stage.

3. The cycle according to claim 1 wherein the first and second members move away from one another during the third stage in an oblique direction opposed to the oblique direction of movement during the first stage.

4. The cycle according to any one of claims 1 to 3 wherein the magnets of like polarity will be brought into close proximity and into general alignment with one another during the first stage and the second stage wherein the magnets of dissimilar polarity move towards and out of general alignment with one another.

5. The cycle according to any one of claims 1 to 4 wherein movable members will be returned to the starting point of the first stage by causing one of the members to repeat the aforesaid magnetic cycle in a reverse direction in conjunction with a third member.

6. A magnetic machine utilizing the cycle claimed in any one of claims 1 to 5 comprising a first member and a second member, guide means for constraining the members to move obliquely towards one another and away from one another during cyclical movement of such members, opposed magnets mounted on the members, such magnets being of dissimilar polarity and in general alignment with one another at the start of the oblique movement of the members towards one another and further magnets mounted on the members, such magnets being of like polarity and being generally out of alignment during the start of the oblique movement of the members towards one another, and generally in alignment at the end of such oblique movement.

7. The machine according to claim 6 wherein magnets are such that magnetic forces attracting the members towards one another is substantially the same as magnetic forces tending to repel the members away from one another.

8. The machine according to claim 6 or claim 7 wherein magnetic forces at the sides of all or selected magnets is reduced by fragmentizing the magnets into a plurality of spaced magnets, or by providing a shield of magnetisable material in association with all or selected magnets, or by other suitable means.

9. The machine according to claim 8 wherein the magnetic forces at the sides of the magnets is reduced by providing a shield of magnetisable material over the opposed surfaces of the magnets.

10. The machine according to claim 8 wherein the magnetic forces at the sides of the magnets is reduced by providing a body of magnetisable material at such sides of the magnets.

11. The machine according to claim 8 wherein magnetic forces at the sides of the magnets is reduced by providing a shield of magnetisable material over the opposed surfaces of the magnets, with portion of the shield extending outwardly beyond the sides of those magnets of like polarity, such outwardly extending portion of the shield generally aligning with an opposed magnet at the start of the oblique movement of the members towards one another.

12. A method of reducing the side forces generated by a magnet at the side thereof comprising the step of fragmetising the magnet into a plurality of spaced magnets.

13. The method according to claim 12 wherein a shield of magnetisable material is positioned on or adjacent the side of the magnet where side forces are to be reduced.

14. Means for reducing side forces of a magnet at a side thereof suitable for use in the method claimed in claim 12 or claim 13 comprising a shield of magnetisable material adapted to be positioned over the magnet or adjacent the side thereof where the magnetic forces are to be reduced.

FIG 1

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 10, no. 259 (E-434)[2315], 4th September 1986; & JP-A-61 85 080 (KAKUSHIN KOGYO K.K.) 30-04-1986 --- | | H 02 K 57/00 |
| A | FR-A-2 553 239 (EDMOND) --- | | |
| P,A | EP-A-0 244 376 (DENEV) ----- | | |

TECHNICAL FIELDS
SEARCHED (Int. Cl.4)

H 02 K 57/00
H 02 K 53/00

The present search report has been drawn up for all claims

| Place of search | Date of completion of the search | Examiner |
|---|---|---|
| THE HAGUE | 11-02-1988 | LE GUAY P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P0401)